# EUROPEAN PATENT APPLICATION

(11) **EP 2 607 056 A1**
(43) Date of publication of application: **26.06.2013**
(21) Application number: 11194808.9
(22) Date of filing: 21.12.2011
(51) Int. Cl.: B29C 65/16

(54) **Apparatus and process for the connection of plastic materials by laser**

(71) Applicant: SOLVAY SA, 1120 Bruxelles (BE)
(72) Inventor: Lakaie, Léon, B-1120 Brussels (BE)
(74) Representative: Vande Gucht, Anne

(57) **Abstract**

Apparatus for joining plastic workpieces (4,5) through laser transmission welding using a laser beam (8) comprising means for focusing (1) a laser beam (8), with aspect ratio exceeding 1, onto the surface of a first workpiece (4) being transparent to the laser beam, means for exerting pressure (3) onto the surface of the first workpiece (4) guided by bearing means (2). Laser beam (8) and workpieces (4,5) move relative to each other. The contact width of said means for exerting pressure (3) with the first workpiece (4) in a direction transversal to the direction of relative movement of the laser beam (8) to the workpieces (4,5) does not exceed the width of the laser beam (8) in the same direction.
A method for joining plastic workpieces (4,5) through laser transmission welding using above apparatus is also claimed.

## Description

The present invention relates to an apparatus and a method for the connection of plastic materials by laser transmission welding.

Methods for welding plastics with the aid of a laser beam are known and generally referred to as laser transmission welding. It is important for these plastics welding methods that the workpieces are in physical contact to one another during the welding operation. The necessity for physical contact in the plastic welding process arises from the basic principle used. The laser beam penetrates through the top transparent layer and the energy of the laser beam is transformed into heat by the layer absorbent for the laser beam, thus leading to a melting of the material at this point. If the transparent part has a sufficient physical contact with the absorbing layer, same is also melted and as a result a stable weld is produced between the two parts in the weld area.

One method to achieve good physical contact between the workpieces to be connected is to clamp same together by suitable clamping means.

While it is relatively easy to produce a good clamping condition with two-dimensional welding contours, problems arise as soon as a welding contour is to be set up in three-dimensional form on three-dimensional parts. It is difficult to realize the mechanical contact of the parts that are to be joined to one another in such cases, particularly when the shape of the parts keeps changing. Both the uniform distribution of the clamping force over the entire area to be welded, and achieving a homogeneous clamping pressure are problematic in this regard. If the clamping pressure is not homogeneous over the entire welding area, the strength of the connection between the parts to be welded will not be homogeneous either.

US2004/0154737 relates to a method and a device for joining workpieces made from plastic with an upper workpiece facing the laser source, consisting of a material transparent to the laser beam and a lower workpiece consisting of a material absorbent the laser beam, such that the mutually bordering contact surfaces for said two workpieces melt and are joined to one and other under pressure during a subsequent cooling, wherein the guiding of the laser beam onto the site to be joined and said mechanical compression of the workpieces are carried out simultaneously by a machining head. Preferably the workpieces are compressed at the point of infringement of the laser beam in a punctiform fashion along a line. The relative movement between the machining had and the workpieces to be welded proceeds at all times with mechanical contact and the laser beam is advantageously focused on to the contact surface via a transparent form or roller that is rotatable and transparent to the laser radiation. In accordance with a preferred embodiment, the welding process is implemented in two steps in such a way that in a first step the workpieces are fixed at one or more defined sites in a punctiform manner with the aid of the machining head and thereafter in a second step the final joined is produced.

US2005/039855 describes an apparatus for connecting plastic materials, in particular materials with flat surfaces, using the laser transmission method, in which a top material layer transparent for the laser beam and facing the laser source is connected under the application of pressure to a bottom layer, which is absorbent for the laser beam and wherein the apparatus comprises a processing head for accommodating guide devices for the laser beam and a device for transmitting the laser beam under the application of pressure to the material that has to be connected, wherein focusing means are arranged in the processing head comprising an integrated lens system interacting with a transparent roller. The laser beam has a cylindrical form and thus it is not easily possible to weld a large surface area. The reference recommends to achieve the welding of larger surfaces through the use of several separate laser beams, which makes it difficult if not impossible to weld three-dimensional structures like honeycomb structures with the apparatus described.

There still exists a need for devices and methods for laser welding plastic parts, in particular plastic parts with a three-dimensional shape in a satisfactory manner to obtain homogeneous welding lines and thus a homogeneous stability of the connection between the workpieces to be connected.

Accordingly, it was an object of the present invention to provide an apparatus and a method for connecting plastic workpieces through laser transmission welding for yielding a uniform welding line and homogeneous connection of the workpieces, which can also be used to homogeneously weld larger surface areas.

This object has been achieved in accordance with the present invention by the apparatus in accordance with claim 1.

Preferred embodiments of the present invention are set forth in the claims dependent on claim 1 and in the detailed description hereinafter.

Another aspect of the present invention in accordance with claim 10 relates to a method for joining workpieces by laser transmission welding.

Preferred embodiments of this aspect of the present invention are set forth in the claims dependent on claim 10 and the detailed description hereinafter.

Figure 1 shows an exemplary apparatus in accordance with the present invention.

Figure 2 shows an enlarged view of section A in Figure 1.

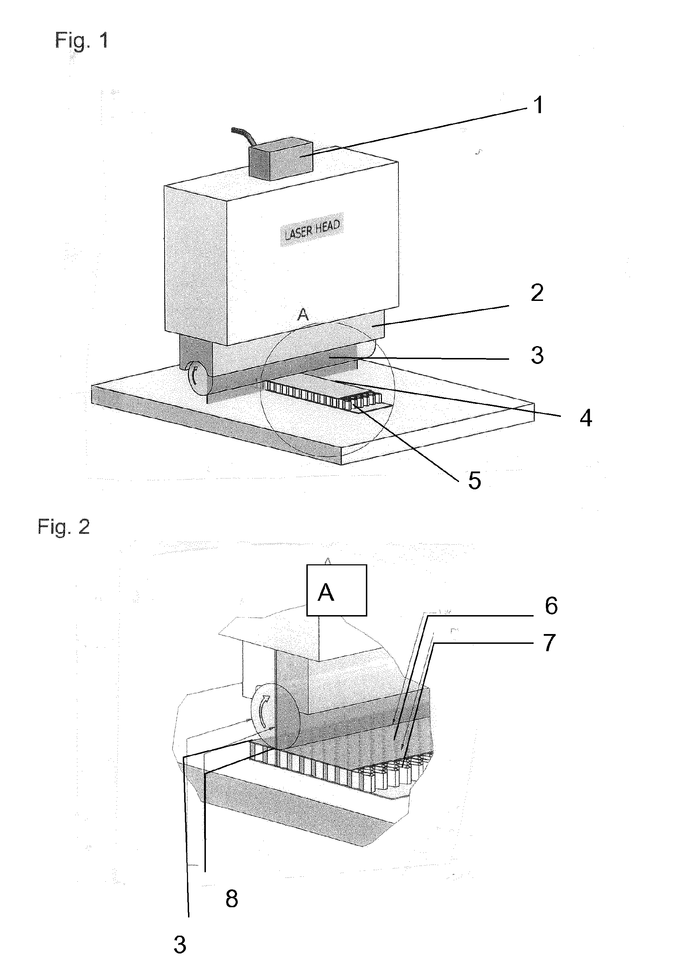

In Figure 1 reference numeral 1 denotes the means for focussing the laser beam, indicated as a laser head. Bearing means 2 providing guidance for the roller or cylinder 3 (the pressure exerting means) which is transparent in the embodiment in Figure 1 and surfaces of a first workpiece 4 and a second workpiece 5 which are to be connected are shown.

In Figure 2 an enlarged view of section A in Fig. 1 is given. The workpieces forming a composite 7 are welded along a welding line 6 with a laser beam 8 which reaches the surface of the first workpiece through transparent roller 3.

The apparatus in accordance with the present invention comprises a means for focussing a laser beam. Such means are generally referred to as laser head or machining head and provide the laser beam at the location where it is needed. The laser beam may be generated in the machining head or it may be generated separately and conducted to the laser or machining head with suitable means e.g. optical fibers or the like. The laser or machining head comprises means to focus the laser beam enabling exactly to a position on the surface of the first workpiece where it is needed, respectively desired, to achieve a good welding result. Furthermore, in accordance with a preferred embodiment, the laser head can be moved in the vertical direction to compensate for unevenness of the substrates to be welded. The skilled person in the art is aware of suitable laser or machining heads for providing the necessary functionality as described above and thus no further detailed explanation or description is necessary here. Suitable laser or machining heads have also been described in the prior art.

In accordance with the present invention, the laser beam can be characterized by a direction and a section perpendicular to said direction (hereinafter, the cross section).

In accordance with the present invention, the laser beam, or more exactly the cross section of the laser beam, has an aspect ratio of greater than 1, preferably greater than 1.5 and particularly preferably greater than 2. It can be of at least 5, at least 10, at least 20 or at least 50.

The aspect ratio of the cross section of the laser beam can be obtained from the rectangle of smallest area circumscribing said section, and is then equal to the ratio of the larger side of said rectangle (i.e. the length of the rectangle) to its smaller side (i.e. the width of the rectangle). Accordingly, a square and a circle have an aspect ratio of 1, while an ellipse has an aspect ratio equal to the ratio of its major axis to its minor axis.

There is no upper limitation as far as the aspect ratio of the laser beam is concerned and the person skilled in the art will select a laser beam with an aspect ratio adapted to the workpieces to be welded and the width of the welding line. The aspect ratio of the laser beam is generally of at most 100,000; it can be of at most 10,000, at most 1,000, at most 500, at most 200, at most 100, at most 50, at most 20 or at most 10. Ranges of aspect ratio obtained by combining any of the above listed aspect ratio lower limits with any one of the above listed aspect ratio upper limits should be considered as explicitly disclosed in the present specification; thus, the aspect ratio of the laser beam can range notably from 1.5 to 10,000, from 2 to 1,000, from 5 to 500, from 10 to 200, from 5 to 200, from 2 to 200, from 10 to 100, from 5 to 100 or from 2 to 100.

The aspect ratio of a laser beam can be adjusted by means of suitable optical systems providing the desired shape and the person skilled in the art knows how to adjust the aspect ratio of a laser beam using such optical systems.

Preferably, the width of the laser beam in a direction transversal to the direction of relative movement of laser beam and workpieces to be connected corresponds to the width of the welding line desired, which enables welding workpieces of significant width within one process step without the need to use several separate lasers or to repeatedly create welding seams located next to each other by subsequent welding steps. This is especially advantageous when welding extended surfaces of workpieces to be connected. Especially in cases where it is important that a welding line as homogeneous as possible has to be achieved over extended surface areas. This can be especially important in cases where one of the workpieces has a three-dimensional structure providing only a limited surface contact area for welding with the second workpiece as is the case e.g. for so called honeycomb structures. Honeycomb structures are natural or man-made structures having the geometry of a honeycomb to allow the minimization of the amount of used material to reach minimal weight and minimal material cost. The common feature of all such structures is an array of hollow cells separated by thin vertical walls. In a classical honeycomb structure the cells are columnar and, as in a a natural honeycomb, hexagonal in shape. However, the cells may also have other shapes. Due to their construction honeycomb structures provide relative high out-of-plane compression properties and out-of-plane shielding properties in relation to the density and the weight, which makes those materials particularly suitable where high mechanical stability on one hand has to be combined with minimum weight.

Due to the use of a laser beam having an aspect ratio exceeding 1, the apparatus in accordance with the present invention is particularly useful for connecting workpieces at least one of which has a honeycomb structure as described above. If a workpiece with a honeycomb-type structure is connected to another, substantially flat workpiece, it is important to achieve a homogeneous welding at the contact area between the workpieces, which, due to the honeycomb structure is only provided by the upper line of the vertical walls of the honeycomb structure and thus only constitutes a small portion of the entire surface.

If one of the workpieces to be connected has a honeycomb structure, same can in principle be the top or the bottom workpiece relative to the laser source, with the bottom workpiece having a honeycomb structure being preferred.

The principle of laser transmission welding requires one of the workpieces to be connected being substantially transparent to the laser beam, i.e. the laser beam passes this workpiece without being substantially absorbed or without substantial direct energy transfer from the laser beam to the workpiece. Transparency for the laser beam does not necessarily mean transparency in the visible range (wavelength approximately 400 to 800 nm) since the wavelength of the laser used can also be outside the range visible to the human eye. The wavelength of the laser beam can be freely chosen in accordance with the materials of the workpieces to be connected and the energy transfer desired. For a number of reasons, including safety aspects for the operating personnel it is preferred to use a laser beam having a wavelength of 500nm or higher, i.e. ultraviolet laser beams are not particularly preferred. The skilled person will choose the wavelength of the laser beam in accordance with the needs of the specific application case, i.e. depending on the materials which have to be connected.

The second workpiece to be connected with the first workpiece has to be designed in such a manner that within this workpiece the energy of the laser beam is transformed into heat which leads to a plastification of the material at this point. The wavelength and the energy density of the laser have to be selected to provide a sufficient heating of the contact area of this absorbent workpiece (relative to the laser beam) to be melted by thermal conduction as a result of the contact of the laser beam with the absorbing layer. The beam energy is transformed into heat and thus the material is plasticized at the impact area of the laser. The transparent upper workpiece is melted by thermal conduction as a result of the physical contact with the absorbing layer of the bottom workpiece and thus an impermeable weld is produced between the two workpieces to be connected in the weld area.

The plastic materials of the two workpieces to be connected can be selected freely from available plastics materials, provided that the melting points or ranges of the two materials are such that the thermal conduction of the solvent layer to the transparent layer enables a plastification of the transparent layer and the absorbing layer at the same time.

The absorbent workpiece can provide the absorbance for the laser beam through the plastic material itself or through the addition of suitable additives absorbent for the laser beam. Additives useful for such purpose can be selected from a wide range of matreials and can also be used to provide desired colors of the absorbent layer by selecting pigments for this purpose which are absorbent for the wavelength of the laser beam used. Without being bound to this group of pigments, carbon black pigments have been used for that purpose in laser transmission welding in a significant number of applications as carbon black materials usually provide a good absorption of the laser beam. However, it has to be emphasized, that any pigment providing sufficient absorbance to ensure the necessary energy transfer from the laser beam to the absorbent material to achieve the desired plastification of the absorbent layer and the transparent layer (the latter is plasticised by thermal conduction) can be used.

From the foregoing it is apparent, that the melting points or melting ranges of the two workpieces to be connected should be preferably similar or overlap with each other to achieve the melting of both parts necessary for the welding.

The apparatus in accordance with the present invention comprises means for exerting pressure onto the surface of the first workpiece (the upper workpiece relative to the laser beam) with the contact width of said means for exerting pressure in a direction transversal to the direction of relative movement of the laser beam and the workpieces to be connected does not exceed the contact width of the laser beam on said surface.

The external contact pressure achieved by the pressure exerting means is applied to achieve an uninterrupted contact between the plastic components in the weld area. The welding quality depends on the regulation of laser energy, the interaction between the laser beam and the plastic material and the good physical contact of the two surfaces.

The good physical contact (which is achieved through the application of pressure) has to be established while the two workpieces to be connected are still in the plasticized status, i.e. within a limited time period after the time of impact of the laser beam on the workpieces. If the pressure through the pressure exerting means is applied outside this time frame, the physical contact of the surfaces of the two workpieces no longer creates a good impermeable weld between the two joining partners in the weld area.

In accordance with a preferred embodiment, the line of impact of the pressure generated through the pressure-exerting means on the surface of said first workpiece essentially coincides with the line of impact of the laser beam on the same surface, i.e. the pressure is basically applied simultaneously with the laser beam reaching the absorbent workpiece. A small time lag inbetween the point in time where the laser beam hits the absorbent workpiece and the application of pressure is allowable and may, in specific circumstances, where the energy transfer of the laser beam and the subsequent plastification of the two workpieces along their contact surfaces requires a certain time, be adjusted to be applied at the exact point in time where the surfaces of the workpieces are in melted or plasticized condition.

According to a further preferred embodiment of the present invention the pressure exerting means and, optionally, also bearing means providing guidance for the pressure exerting means, is, respectively are, transparent for the laser beam used. By choosing a respective material it is conveniently possible to apply the pressure within the narrow time frame needed as explained above after the time of impact of the laser beam on the surface. Again, as mentioned before, transparent to the laser beam does not necessarily mean transparent in the visible range for the human eye as the wavelength of the laser beam may be outside that range.

A preferred material for the pressure exerting means and/or the bearing means is glass, which usually provides an excellent transparency in the wavelength range used for the laser beam. However, other materials are also suitable.

According to the present invention the pressure exerting means is designed such that the contact width of said means for exerting pressure with the first workpiece in a direction transversal to the direction of relative movement of the laser beam and the workpieces does not exceed the width of the laser beam in the same direction. With other words this means that the pressure is exerted through the pressure exerting means substantially only in an area where the two surfaces of the workpieces to be melted are in the plasticized or molten state. While it is possible that the contact width of the pressure exerting means in the direction transversal to the direction of relative movement of the laser beam and the workpieces may be smaller than the contact width of the laser beam with the surface of the upper workpiece in the same direction it has proven to be important, that the contact width of the pressure exerting means does not exceed the contact width of the laser beam. Generally it is preferred that the contact width of the laser beam and the pressure exerting means are substantially the same. The pressure exerting means also preferably has an aspect ratio exceeding 1.

According to a preferred embodiment a cylindrical means, e.g. a roller, is used for applying or exerting pressure on the surface of the workpieces to be connected. A cylindrical pressure exerting means provides a precise line of impact with the surface of the workpieces to be connected and thus good and reproducible results in terms of homogeneity of the welding line.

The pressure exerting means is guided by bearing means which provide the necessary control of the pressure exerting means to apply the pressure at the location desired.

As, during the welding process, a relative movement between the laser beam and the workpieces to be connected is established, it is preferred that the pressure exerting means is rotatably mounted in the bearing providing the guidance, which reduces the friction between the pressure exerting means and the workpieces and avoids or at least reduces the risk of physical damage of the surface of the workpieces by the pressure exerting means moving along the surface of the workpieces.

To reduce the friction between the pressure exerting means and the bearing means providing guidance for same, the pressure exerting means preferably is equipped with means for providing an air cushion between the bearing means and the pressure exerting means. This can be achieved for example by drilling holes into the bearing means to provide a flow of compressed air which creates the desired air cushion between the pressure exerting means and the bearing means.

The person skilled in the art knows how to constructively design respective bearing means in combination with the pressure exerting means, so that more detailed explanations are not necessary here.

According to another preferred embodiment of the present invention the means for focusing the laser beam provides the possibility to adjust the impact angle of the laser beam on the surfaces of the workpieces in a range of from 60 to 90°. The impact angle of the laser beam on the surface of the workpiece has an influence on the extension of the surface area plasticized and angles close to or identical with a vertical angle are advantageously focusing the laser beam precisely in such manner to transfer the energy at the points where a contact between the two workpieces can be established, which is especially important in case of using workpieces with a honeycomb structure as mentioned and explained above.

To achieve a welding of extended surfaces it is necessary that during the welding process a relative movement of the laser beam and the workpieces to be connected is established, so that the laser beam can continuously plasticise the lower workpiece and the upper workpiece while being in relative movement relative to the workpieces. It is apparent that such relative movement can be achieved by either moving the laser head or by moving the workpieces to be connected and both possibilities are equally suitable for the apparatus of the present invention.

Another embodiment of the present invention relates to a method for joining workpieces made from plastic materials through laser transmission welding using a laser beam wherein a first workpiece being transparent for the laser beam and a second workpiece being absorbent for the laser beam are arranged such that the first workpiece faces the laser beam and the workpieces are in contact with each other, focusing a laser beam onto the surface of said first workpiece, simultaneously applying pressure through means guided by bearing means and suitable for exerting pressure onto the surface of said first workpiece and establishing a relative movement of the laser beam and the means for exerting pressure on one hand and the workpieces to be joined on the other hand, wherein a laser beam having an aspect ratio exceeding 1 is used and wherein means for exerting pressure having a contact width with the first workpiece in a direction transversal to the direction of relative movement of the laser beam and the workpieces not exceeding the width of the laser beam in the same direction are used.

According to a preferred embodiment of the method in accordance with the present invention a pressure exerting means transparent for the laser beam is used.

According to another preferred embodiment of the inventive method a roller is used as pressure exerting means.

According to still another embodiment an air cushion is established between the bearing means for guiding the pressure exerting means and the pressure exerting mean itself to reduce the friction between both.

In another embodiment of the method in accordance with the present invention the laser beam is focused in such a manner, that the impact angle of the laser beam onto the surface of the workpieces to be connected is within the range of from 60 to 90°.

The constructive design and elements necessary to realize the preferred embodiments of the method in accordance with the present invention are described herein above in connection with the apparatus in accordance with the present invention in more detail and accordingly reference is made thereto at this point to avoid duplication.

The apparatus in accordance with the present invention and the method of the invention enable the connection of workpieces made from plastic materials long extended surface areas to obtain a homogeneous and stable welding line.

The apparatus and the method in accordance with the present invention are particularly suitable to connect workpieces with honeycomb structures with other workpieces, which has been problematic in terms of homogeneity and strength of the welding line in the past.

## Claims

1. An apparatus for joining workpieces made from plastic through laser transmission welding using a laser beam comprising means for focusing a laser beam onto the surface of a first workpiece being transparent to the laser beam, means for exerting pressure onto the surface of the first workpiece guided by bearing means and means for creating a relative movement between the laser beam and the workpieces to be joined, wherein
a) the laser beam has an aspect ratio exceeding 1, and
b) the contact width of said means for exerting pressure with the first workpiece in a direction transversal to the direction of relative movement of the laser beam to the workpieces does not exceed the width of the laser beam in the same direction.

2. Apparatus in accordance with claim 1 wherein the laser beam has an aspect ratio of at least 2.

3. Apparatus in accordance with claim 1 or 2 wherein the laser beam has an aspect ratio of at most 200.

4. Apparatus in accordance with any one of the preceding claims wherein the pressure exerting means is installed in such a manner that the line of impact of the pressure-exerting device on the surface of said first workpiece essentially coincides with the line of impact of the laser beam on said surface.

5. Apparatus in accordance with any one of the preceding claims wherein the pressure exerting means is transparent for the laser beam.

6. Apparatus in accordance with any one of the preceding claims wherein the pressure exerting means is a roller.

7. Apparatus in accordance with claim 6 wherein the roller is rotatably mounted.

8. Apparatus in accordance with any one of the preceding claims wherein the bearing means for the pressure exerting device is equipped with means for providing an air cushion between the pressure exerting means and the bearing means.

9. Apparatus in accordance with any one of the previous claims wherein the means for focussing the laser beam is installed in such a manner to enable an impact angle of the laser beam on the surface of the first workpiece in the range of from 60 to 90 degrees.

10. A method for joining workpieces made from plastic materials through laser transmission welding using a laser beam wherein a first workpiece being transparent for the laser beam and a second workpiece being absorbent for the laser beam are arranged such that the first workpiece faces the laser beam and the workpieces are in contact with each other, focusing a laser beam onto the surface of said first workpiece, simultaneously applying pressure through means guided by bearing means for exerting pressure onto the surface of said first workpiece and establishing a relative movement of the laser beam and the means for exerting pressure one hand and the workpieces to be joined on the other hand, wherein a laser beam having an aspect ratio exceeding 1 is used and wherein non--spherical means for exerting pressure having a contact width with the first workpiece in a direction transversal to the direction of relative movement of the laser beam and the workpieces not exceeding the width of the laser beam in the same direction are used.

11. Method in accordance with claim 10 wherein the laser beam has an aspect ratio of at least 2, in particular from 2 to 200.

12. Method in accordance with claim 10 or 11 wherein a pressure exerting means transparent for the laser beam is used.

13. Method in accordance with any one of claims 10 to 12 wherein a roller is used as pressure exerting means.

14. Method in accordance with any one of claims 10 to 13 wherein an air cushion is established between the pressure exerting means and the bearing means.

15. Method in accordance with any one of claims 10 to 14 wherein the laser beam is focussed in such a manner that the impact angle of the laser beam on the surface of the first workpiece is in the range of from 60 to 90 degrees.
